# EUROPÄISCHE PATENTSCHRIFT

(11) **EP 2 561 167 B1**
(45) Veröffentlichungstag und Bekanntmachung des Hinweises auf die Patenterteilung: **22.06.2016**
(21) Anmeldenummer: 11705531.9
(22) Anmeldetag: 23.02.2011
(51) Int. Cl.: E05B 17/10, E05B 81/78, B60Q 1/26

(54) **TÜRAUSSENGRIFF MIT PASSIVE-ENTRY-BAUGRUPPEN UND EINER BELEUCHTUNGSBAUGRUPPE**
EXTERIOR DOOR HANDLE WITH PASSIVE-ENTRY SUBASSEMBLIES AND A LIGHTING SUBASSEMBLY
POIGNEE EXTERIEURE DE PORTE MUNIE DE MODULES D'ACCES PASSIF ET D'UN MODULE D'ECLAIRAGE

(30) Priorität: 19.04.2010 DE 102010016526
(43) Veröffentlichungstag der Anmeldung: 27.02.2013
(73) Patentinhaber: Huf Hülsbeck & Fürst GmbH & Co. KG, 42551 Velbert (DE)
(72) Erfinder: WITTE, Martin, 48683 Ahaus (DE); SIEG, Berthold, 46240 Bottrop (DE)
(74) Vertreter: Zenz Patentanwälte Partnerschaft mbB
(86) Internationale Anmeldenummer: PCT/EP2011/052659
(87) Internationale Veröffentlichungsnummer: WO 2011/131393

(56) Entgegenhaltungen:
- EP-A1- 1 253 269
- EP-A1- 1 609 674
- EP-A2- 1 582 670
- EP-A2- 2 119 852
- WO-A1-2008/137634
- DE-A1-102005 035 935
- DE-A1-102007 020 433
- US-A1- 2004 104 815

## Beschreibung

Die Erfindung betrifft eine Türaußengriff-Anordnung für ein Kraftfahrzeug mit einem Türaußengriff, der eine Kommunikationsbaugruppe und eine Sensorbaugruppe enthält, wobei die Kommunikationsbaugruppe mit einer ersten und einer zweiten Zuleitung verbunden ist, wobei die Sensorbaugruppe mit einer dritten und einer vierten Zuleitung verbunden ist, wobei die vier Zuleitungen an einem Verbinder des Türaußengriffs enden, der mit einem kraftfahrzeugseitigen Gegenstück der Türaußengriff-Anordnung verbindbar ist, wobei ein mit der ersten Zuleitung koppelbarer erster Anschluss und ein mit der zweiten Zuleitung koppelbarer zweiter Anschluss des kraftfahrzeugseitigen Gegenstücks mit einer Schaltung gekoppelt sind, die zum Betreiben der Kommunikationsbaugruppe stets jeweils einen der beiden Anschlüsse auf ein hohes Potenzial und den anderen Anschluss auf ein niedriges Potenzial legt, und wobei ein mit der dritten Zuleitung koppelbarer dritter Anschluss des kraftfahrzeugseitigen Gegenstücks mit einer Schaltung gekoppelt ist, die zum Betreiben der Sensorbaugruppe den dritten Anschluss auf Masse oder eine Versorgungsspannung legt.

Eine Türaußengriff-Anordnung der eingangs genannten Art wird beispielsweise bei sogenannten Passive-Entry-Systemen benutzt, das heißt bei Systemen, die einen Zugang zu einem Kraftfahrzeug ohne mechanisches Betätigen eines Schlüssels und ohne Betätigen eines elektronischen Schlüssels (Drücken einer Taste) gestatten. Der Benutzer eines Kraftfahrzeugs trägt beispielsweise einen sogenannten ID-Geber mit sich. Sobald die Sensorbaugruppe, die vorzugsweise einen kapazitiven Annäherungssensor umfasst, die Annäherung eines Bedienerkörperteils erfasst, sorgt eine mit der Sensorbaugruppe gekoppelte Steuereinrichtung innerhalb des Kraftfahrzeugs dafür, dass über eine Sendespule der Kommunikationsbaugruppe in dem Türaußengriff ein sogenanntes Wecksignal an den ID-Geber abgestrahlt wird, wobei der ID-Geber dann, wenn er sich innerhalb eines vorgegebenen Bereichs in der Nähe des Kraftfahrzeugs befindet, dieses Signal empfängt und daraufhin der ID-Geber seinerseits eine Nachricht an das Kraftfahrzeug abstrahlt. Die von der Sendespule ausgehende Kommunikation findet beispielsweise im sogenannten LF-Frequenzbereich (Low Frequency, insbesondere bei beispielsweise 125kHz) statt. Die Antwort strahlt der ID-Geber im Hochfrequenzbereich, beispielsweise bei einigen hundert MHz ab. Die Kommunikation zwischen der Steuereinrichtung des Kraftfahrzeugs und dem ID-Geber dient dazu, die Zugangsberechtigung des den ID-Geber mit sich führenden Benutzers festzustellen. Wird eine Zugangsberechtigung festgestellt, so kann der Benutzer durch Betätigen des Türgriffs die Kraftfahrzeugtür öffnen, da zuvor eine Entriegelung des Schlosses vorgenommen wurde. Auf das bekannte Verfahren zur Ermittlung einer Zugangsberechtigung eines Bedieners und die Abläufe bis hin zum Öffnen der Kraftfahrzeugtür soll hier nicht näher eingegangen werden, denn sie sind für die hier zu beschreibende Erfindung nicht wesentlich.

Bei den für diese Passive-Entry-Systeme verwendeten Türaußengriffen sind sowohl eine eine Sendespule umfassende Kommunikationsbaugruppe zur Kommunikation mit dem ID-Geber als auch eine kapazitive Sensorbaugruppe zum Erfassen der Annäherung eines Bedienerkörperteils jeweils mit Zuleitungen verbunden, die aus dem Türaußengriff herausgeführt, durch eine Türwandung hindurchgeführt und im Inneren der Tür mit einem zugehörigen Anschluss verbunden sind. Bei einer bekannten Anordnung ist sowohl die Kommunikationsbaugruppe als auch die Sensorbaugruppe jeweils mit zwei Zuleitungen mit einem Steckverbinder gekoppelt. Es wird hierbei ein vierpoliger Steckverbinder verwendet, der mit einem entsprechenden kraftfahrzeugseitigen Gegenstück im Inneren der Tür verbindbar ist. An dem kraftfahrzeugseitigen Gegenstück sind dann die Schaltungen zum Ansteuern bzw. Auswerten der in dem Türaußengriff enthaltenen Baugruppen angekoppelt. Beispielsweise ist mit den zur Kommunikationsbaugruppe (die die Sendespule umfasst) führenden Zuleitungen eine Schaltung gekoppelt, die einerseits Treiber zum Ansteuern der beiden Anschlüsse und andererseits einen diese Treiber ansteuernden Controller umfasst. Zum Ansteuern der Kommunikationsbaugruppe mit einem LF-Signal werden die Treiber im Gegentakt mit der Frequenz des LF-Signals angesteuert, so dass sich stets der eine Anschluss auf einem hohen Potenzial (beispielsweise Betriebsspannung) und der andere Anschluss auf einem niedrigen Potenzial (beispielsweise Masse) befindet. Wenn keine Ansteuerung des LF-Signals stattfindet, liegt der eine Anschluss auf dem hohen Potenzial, während der verbleibende Anschluss auf dem niedrigen Potenzial ruht.

Die mit den Zuleitungen zu der im Türgriff enthaltenen kapazitiven Sensorbaugruppe gekoppelten kraftfahrzeugseitigen Anschlüsse des Gegenstücks sind mit einer Ansteuer- und Auswerteschaltung für die Sensorbaugruppe gekoppelt, wobei einer der beiden Anschlüsse über einen Schalter mit Masse oder mit der Betriebsspannung koppelbar ist.

Aus der Offenlegungsschrift DE 10 2005 035 935 A1 ist eine Türaußengriff-Anordnung für ein Kraftfahrzeug bekannt mit einem Türaußengriff, der eine Kommunikationsbaugruppe und eine Sensorbaugruppe enthält, wobei die Kommunikationsbaugruppe mit einer ersten und einer zweiten Zuleitung verbunden ist, wobei die Sensorbaugruppe mit einer dritten und einer vierten Zuleitung verbunden ist, wobei die vier Zuleitungen an einem Verbinder des Türaußengriffs enden, der mit einem kraftfahrzeugseitigen Gegenstück verbindbar ist.

Aus den Druckschriften EP 2 119 852 A2, EP 1 582 670 A2, EP 1 609 674 A1, EP 1 253 269 A1, US 2004/0104815 A1, WO 2008/137634 A1 und DE 10 2007 020 433 A1 sind Kraftfahrzeugtürgriff mit Beleuchtungsbaugruppen bekannt.

Der Erfindung liegt die Aufgabe zugrunde, bei einem Türaußengriff der beschriebenen Art eine Beleuchtungsmöglichkeit vorzusehen, ohne dass zusätzliche Anschlussleitungen herausgeführt oder zusätzliche Anschlüsse im Steckverbinder vorgesehen werden müssen.

Diese Aufgabe wird erfindungsgemäß durch eine Türaußengriff-anordnung mit den Merkmalen des Anspruchs 1 gelöst. Erfindungsgemäß ist eine Türaußengriff-Anordnung der eingangs genannten Art dadurch gekennzeichnet, dass der Türaußengriff eine Beleuchtungsbaugruppe aufweist, die zwischen einem Abgriff an der dritten Zuleitung und einem Knoten eingekoppelt ist, wobei der Knoten über eine erste Diode mit einem Abgriff an der ersten Zuleitung und über eine zweite Diode mit einem Abgriff an der zweiten Zuleitung gekoppelt ist, wobei beide Dioden mit der gleichen Elektrode (Anode oder Kathode) mit dem Knoten gekoppelt sind.

Die Erfindung basiert auf dem Grundgedanken, die zusätzlich vorzusehende Beleuchtungsbaugruppe über die vorhandenen Zuleitungen und die kraftfahrzeugseitig an die Anschlüsse des Verbinders (beispielsweise vierpoligen Steckverbinders) angekoppelten Schaltungen anzusteuern, ohne dabei den Betrieb der Kommunikationsbaugruppe einerseits oder den Betrieb der Sensorbaugruppe andererseits zu stören. Die Erfindung basiert ferner auf der Erkenntnis, dass über eine Anschlussleitung der Sensorbaugruppe entweder eine durch eine Schalteinrichtung steuerbare Masseverbindung oder Verbindung zur Versorgungsspannung zur Verfügung gestellt werden kann, während die Zuleitungen zur Kommunikationsbaugruppe das entgegengesetzte Spannungspotenzial, also die Masse oder die Versorgungsspannung, bereitstellen können. Dies wird ermöglicht, indem die Tatsache ausgenutzt wird, dass die Schaltung zum Betreiben der Kommunikationsbaugruppe unabhängig davon, ob die LF-Anregung erfolgt oder nicht, stets jeweils einen der beiden Anschlüsse auf ein hohes und den anderen Anschluss auf ein niedriges Potenzial legt. Dadurch, dass beide Anschlussleitungen über in gleicher Ausrichtung geschaltete Dioden mit einem Schaltungsknoten gekoppelt werden, kann auf diesem Knoten in Abhängigkeit von der Polung der Dioden entweder ein niedriges Potenzial (z. B. Massepotenzial) oder ein hohes Potenzial (z. B. Versorgungsspannungspotenzial) zur Verfügung gestellt werden, wobei dann zwischen dem Knoten und der auf Masse (oder auf die Versorgungsspannung) schaltbaren Anschlussleitung der Sensorbaugruppe die Beleuchtungsbaugruppe eingekoppelt werden kann. Die Beleuchtungsbaugruppe umfasst beispielsweise eine LED und entsprechende Vorwiderstände und ist so dimensioniert, dass ihr Energiebedarf die Funktionen der anderen Baugruppen nicht beeinträchtigt. Diese Ankopplung der Beleuchtungsbaugruppe hat außerdem den Vorteil, dass die kraftfahrzeugseitige Steuereinrichtung durch entsprechende Ansteuerung der die Kommunikationsbaugruppe betreibenden Schaltung einerseits und der mit der Sensorbaugruppe gekoppelten Schaltung andererseits zugleich auch gezielt die Beleuchtungsbaugruppe mit Spannung versorgen kann, so dass die Steuereinrichtung auch für ein Einschalten bzw. Abschalten der Beleuchtungsbaugruppe sorgen kann. Hierzu bedarf es weder zusätzlicher Zuleitungen noch Steckverbinderanschlüsse oder zusätzlicher kraftfahrzeugseitiger Ansteuerschaltungen. Änderungen sind lediglich in der Software der ansteuernden Controller erforderlich.

Bei der bevorzugten Ausführungsform ist das hohe Potenzial eine Versorgungsspannung und das niedrige Potenzial die Masse. Allerdings würde die erfindungsgemäße Beleuchtungsbaugruppe auch dann betreibbar sein, wenn die Anschlüsse der Schaltung zum Ansteuern der Kommunikationsbaugruppe zwischen anderen hohen und niedrigen Potenzialen hin- und hergeschaltet würden, beispielsweise zwischen Masse und einer gegenüber der Betriebsspannung geringeren Spannung.

Bei der bevorzugten Ausführungsform der erfindungsgemäßen Türaußengriff-Anordnung umfasst die Kommunikationsbaugruppe einen aus einer Reihenschaltung einer Sendespule und eines Kondensators bestehenden Serienschwingkreis. Die Sendespule dient vorzugsweise zum Abstrahlen eines modulierten Signals mit einer Grundfrequenz im LF-Bereich, beispielsweise von 125kHz.

Bei einer Ausführungsform umfasst die Sensorbaugruppe einen kapazitiven Annäherungssensor mit einer Elektrodenanordnung und einer Ansteuerelektronik.

Bei einer bevorzugten Ausführungsform umfasst die Beleuchtungsbaugruppe eine LED. Der LED ist vorzugsweise ein Widerstand oder ein Widerstandsnetzwerk (beispielsweise eine Parallelschaltung von zwei Widerständen) vorgeschaltet.

Bei einer vorteilhaften Ausführungsform der erfindungsgemäßen Türaußengriff-Anordnung sind die Abgriffe mit den Zuleitungen im Inneren des Türaußengriffs verbunden. Aus dem Türaußengriff werden dann (wie bei einem herkömmlichen Türaußengriff) die vier Zuleitungen mit dem daran befestigen Verbinder herausgeführt. Der Verbinder ist vorzugsweise ein vierpoliger Steckverbinder.

Bei der bevorzugten Ausführungsform ist die Türaußengriff-Anordnung dadurch gekennzeichnet, dass der mit der dritten Zuleitung koppelbare dritte Anschluss des kraftfahrzeugseitigen Gegenstücks mit einem Schalter gekoppelt ist, der zum Betreiben der Sensorbaugruppe den dritten Anschluss auf Masse legt, und dass beide Dioden mit ihren Kathoden mit dem Knoten gekoppelt sind.

Nachfolgend wird die Erfindung anhand eines in den Zeichnungen dargestellten bevorzugten Ausführungsbeispiels näher beschrieben. In den Zeichnungen zeigen:
Figur 1 eine schematische Schnittdarstellung durch einen Türaußengriff mit einer Kommunikationsbaugruppe, einer kapazitiven Sensorbaugruppe und einer Beleuchtungsbaugruppe; und
Figuren 2A bis 2D die Schaltungen der erfindungsgemäßen Türaußengriff-Anordnung, wobei

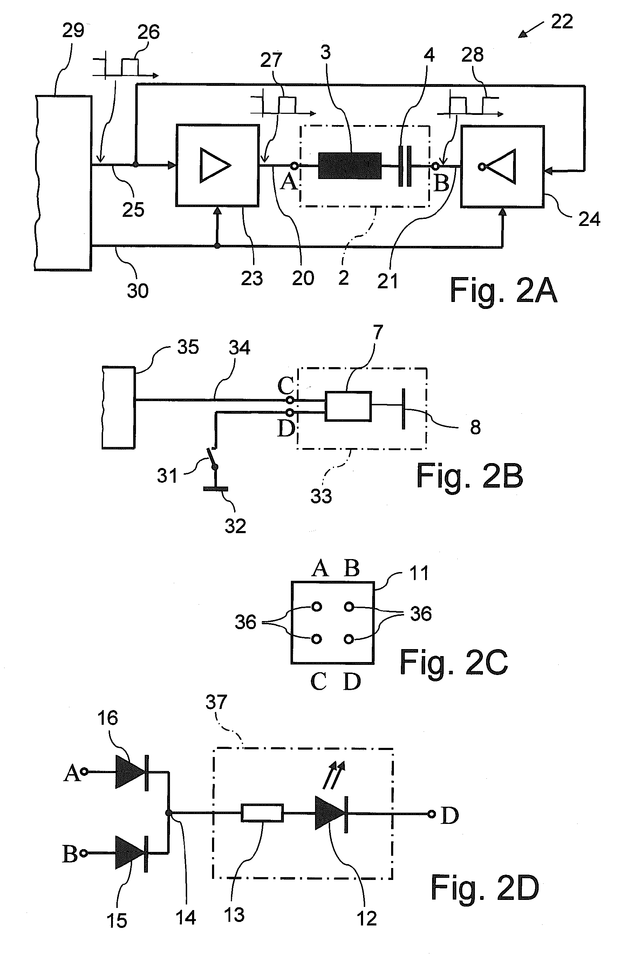

Figur 2A die Schaltung der Kommunikationsbaugruppe und der kraftfahrzeugseitigen Schaltung zum Ansteuern der Kommunikationsbaugruppe,
Figur 2B die kapazitive Sensorbaugruppe und die kraftfahrzeugseitige Beschaltung der Anschlüsse der Sensorbaugruppe,
Figur 2C eine schematische Darstellung des vierpoligen Steckverbinders und
Figur 2D die erfindungsgemäß innerhalb des Türaußengriffs hinzugefügte Beleuchtungsbaugruppe mit den an die Abgriffe ankoppelnden Dioden zeigt.

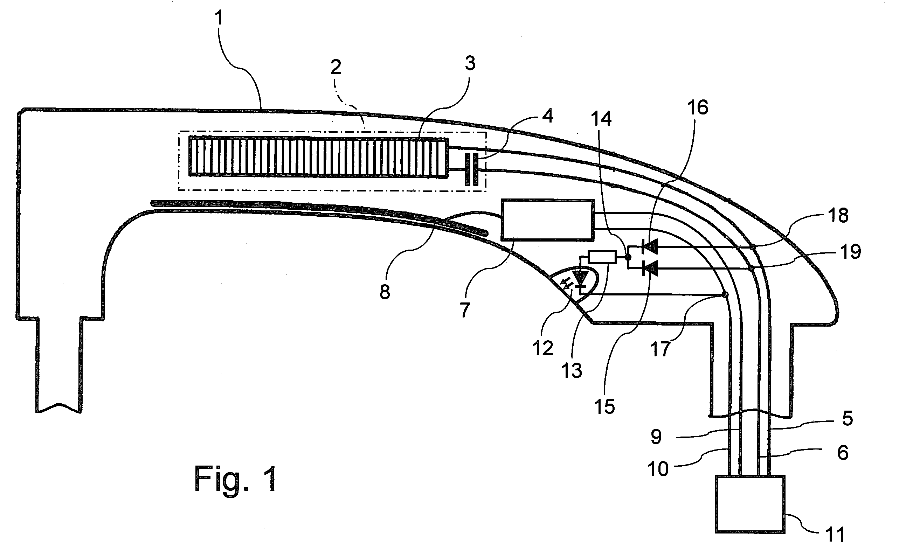

Figur 1 zeigt die in einem Türaußengriff 1 enthaltenen Baugruppen. Der Türaußengriff 1 enthält zunächst eine Kommunikationsbaugruppe 2, die zur Kommunikation mit einem ID-Geber dient, insbesondere der Übermittlung von Signalen von dem Türaußengriff zu dem ID-Geber (z. B. Wecksignale). Die Kommunikationsbaugruppe 2 umfasst einen Serienschwingkreis, der aus einer Sendespule 3 und einem dazu in Reihe geschalteten Kondensator 4 besteht.

Über die Zuleitungen 5 und 6 ist der Serienschwingkreis der Kommunikationsbaugruppe 2 mit zwei Anschlüssen des Steckverbinders 11 verbunden.

Der Türaußengriff 1 enthält ferner eine kapazitive Sensorbaugruppe, die eine Ansteuerschaltung 7 und eine mit der Ansteuerschaltung 7 gekoppelte kapazitive Sensorelektrode 8 umfasst. Die Sensorbaugruppe ist über zwei Zuleitungen 9 und 10 mit dem Steckverbinder 11 gekoppelt. Die vier Zuleitungen 5, 6, 9 und 10 sind aus dem Türaußengriff 1 herausgeführt und enden in dem Steckverbinder 11. Nach dem Einsetzen des Türaußengriffs in eine entsprechende Aufnahme wird der Steckverbinder 11 in ein im Türinneren angeordnetes kraftfahrzeugseitiges Gegenstück eingesteckt.

Der erfindungsgemäße Türaußengriff 1 enthält ferner eine aus einer LED 12 und einem Vorwiderstand 13 bestehende Beleuchtungsbaugruppe. Bei dem in Figur 1 schematisch dargestellten Beispiel ist die LED 12 in einer entsprechenden Aufnahme so angeordnet, dass sie beispielsweise die Griffmulde des Türgriffs 1 beleuchten kann. Die aus LED 12 und Widerstand 13 bestehende Beleuchtungsbaugruppe ist zwischen einem Abgriff 17 an der Zuleitung 10 und einem Knoten 14 eingekoppelt. Zwischen dem Knoten 14 und den Abgriffen 18 und 19 an den Zuleitungen 5 und 6 der Kommunikationsbaugruppe 2 sind Dioden 15 und 16 derart eingekoppelt, dass deren Kathoden mit dem Knoten 14 und deren Anoden mit den Abgriffen 18 bzw. 19 gekoppelt sind. Sofern an der Zuleitung 10 und somit an dem Abgriff 17 Masse anliegt und an wenigstens einer der beiden Zuleitungen 5 und 6 und somit an den Abgriffen 18 und 19 eine Versorgungsspannung anliegt, so ergibt sich ein Stromfluss über wenigstens eine der Dioden 15 und 16, über den Widerstand 13 und die LED 12, so dass ein Lichtsignal erzeugt wird.

Die hinzugefügte Beleuchtungsanordnung erfordert keine konstruktiven Änderungen des Steckverbinders 11. Auch kraftfahrzeugseitig können die vorhandenen Ansteuerschaltungen und Anschlüsse benutzt werden.

Die Figur 2A zeigt schematisch die Ansteuerschaltung für die beiden Anschlüsse der Kommunikationsbaugruppe 2. Die die Sendespule 3 und den Kondensator 4 umfassende Kommunikationsbaugruppe 2 weist zwei mit A und B bezeichnete Anschlüsse auf, die jeweils mit einem Ausgang einer Treiberschaltung 23 bzw. 24 gekoppelt sind. Die Eingänge der Treiberschaltungen 23 und 24 werden über die Leitung 25 angesteuert, wobei die Leitung 25 mit einem Ausgang eines Mikrocontrollers 29 gekoppelt ist. Der Mikrocontroller 29 gibt auf Leitung 25 ein Rechtecksignal aus, wie es beispielsweise durch den mit der Bezugsziffer 26 gekennzeichneten schematischen Signalverlauf dargestellt werden kann. Die Treiberschaltung 23 empfängt das auf Leitung 25 anliegende Ansteuersignal und erzeugt ein gleichphasiges Signal, wie es durch den mit der Bezugsziffer 27 gekennzeichneten Verlauf veranschaulicht ist. Der invertierende Treiber 24 erzeugt ein invertiertes Signal, wie es durch den mit der Bezugsziffer 28 gekennzeichneten Verlauf dargestellt ist. Diese gegenphasigen Signale werden über die Anschlussleitungen 20 und 21 an die Anschlüsse A bzw. B des die Kommunikationsbaugruppe 2 bildenden Serienschwingkreises angelegt. Man erkennt, dass sich zu jedem Zeitpunkt entweder der Anschluss A oder der Anschluss B auf einem hohen Potenzial, beispielsweise auf Betriebsspannung befindet.

Die Ansteuerschaltung umfasst ferner eine von dem Mikrocontroller 29 angesteuerte Leitung 30, die an Steueranschlüsse der Treiber 23 und 24 angekoppelt ist. Ein Signal auf Leitung 30 versetzt die Treiberschaltungen 23 und 24 in einen Tri-State-Zustand, bei dem die Anschlussleitungen 20 bzw. 21 hochohmig entkoppelt werden.

Figur 2B zeugt schematisch die kapazitive Sensorschaltung 33, die eine Ansteuerschaltung 7 und eine mit der Ansteuerschaltung 7 gekoppelte Sensorelektrode 8 umfasst. Zwei Anschlüsse der Ansteuerschaltung 7 sind aus dem Türgriff herausgeführt und mit den Anschlüssen C und D des Steckverbinders 11 gekoppelt. An den Anschluss D ist kraftfahrzeugseitig ein diesen Anschluss mit Masse 32 verbindender Schalter 31 angekoppelt. Der Schalter 31 ist üblicherweise eine elektronisch angesteuerte Schalteinrichtung. Über Leitung 34 ist der Anschluss C der kapazitiven Sensorbaugruppe 33 mit einer Auswerteschaltung 35 des Sensors gekoppelt.

Figur 2C zeigt eine schematische Darstellung einer Draufsicht auf den Steckverbinder 11 mit vier Anschlussstiften 36, die den in den Figuren 2A und 2B gezeigten Anschlüssen A, B, C, und D zugeordnet sind.

Figur 2D zeigt die zum Türaußengriff hinzugefügte Schaltung zum Schaffen einer zusätzlichen Beleuchtungsmöglichkeit, die die eigentliche Beleuchtungsbaugruppe 37 und jeweils eine einen Anschluss der Beleuchtungsbaugruppe 37 mit den Abgriffen an den Anschlüssen A und B verbindende Dioden 15 und 16 zeigt. Die Beleuchtungsbaugruppe 37 umfasst bei dem in Figur 2D dargestellten Ausführungsbeispiel eine LED 12 mit einem vorgeschalteten Reihenwiderstand 13. Anstelle des einzelnen Widerstands 13 können auch (beispielsweise aus Gründen der besseren Wärmeableitung) zwei oder mehr parallel geschaltete Widerstände eingesetzt werden.

Die Beleuchtungsbaugruppe 37 ist zwischen dem Anschluss D, der gemäß Figur 2B über den Schalter 31 mit Masse 32 verbindbar ist, und dem Knoten 14 eingekoppelt. Der Knoten 14 wiederum ist über die Diode 15 mit dem Anschluss B der Schaltung gemäß Figur 2A und über die Diode 16 mit dem Anschluss A der Schaltung gemäß Figur 2A verbunden. Sofern nicht über das Steuersignal auf Leitung 30 gemäß Figur 2A die Ausgänge der Treiberschaltungen 23 und 24 in einen hochohmigen Zustand versetzt worden sind, liegt jeweils einer der Anschlüsse A und B auf einer hohen Spannung, vorzugsweise auf der Versorgungsspannung. Sofern nicht der Schalter 31 gemäß Figur 2B geöffnet ist, liegt der Anschluss D auf Masse. Somit fließt zwischen dem auf hohem Potenzial befindlichen Anschluss A oder der Anschluss B und der zugehörigen Diode 15 bzw. 16 ein Strom über den Vorwiderstand 13 und die LED 12 zum Masseanschluss D. Bei einer bevorzugten Ausführungsform werden die Bauelemente der Schaltung gemäß Figur 2D so dimensioniert, dass bei eingeschalteter Beleuchtung ein Strom in der Größenordnung zwischen 20 und 40 mA fließt. Parallel zu der Reihenschaltung aus Widerstand 13 und LED 12 kann noch eine ESD-Schutzdiode geschaltet sein.

Die beschriebene Art des Einbaus einer Beleuchtungsbaugruppe ist für sämtliche Arten der an einem Türgriff anbringbaren Beleuchtungen verwendbar, beispielsweise für Ambiente-Beleuchtungen, Vorfeldbeleuchtungen oder Griffmuldenbeleuchtungen.

## Patentansprüche

1. Türaußengriff-Anordnung für ein Kraftfahrzeug mit einem Türaußengriff (1), der eine Kommunikationsbaugruppe (2) und eine Sensorbaugruppe (33) enthält,
wobei die Kommunikationsbaugruppe (2) mit einer ersten und einer zweiten Zuleitung (5, 6) verbunden ist,
wobei die Sensorbaugruppe (33) mit einer dritten und einer vierten Zuleitung (9, 10) verbunden ist,
wobei die vier Zuleitungen (5, 6, 9, 10) an einem Verbinder (11) des Türaußengriffs (1) enden, der mit einem kraftfahrzeugseitigen Gegenstück der Türaußengriff-Anordnung verbindbar ist,
wobei ein mit der ersten Zuleitung (5) koppelbarer erster Anschluss (20) und ein mit der zweiten Zuleitung (6) koppelbarer zweiter Anschluss (21) des kraftfahrzeugseitigen Gegenstücks mit einer Schaltung (22) gekoppelt sind, die zum Betreiben der Kommunikationsbaugruppe (2) stets jeweils einen der beiden Anschlüsse (20, 21) auf ein hohes Potenzial und den anderen Anschluss auf ein niedriges Potenzial legt, und
wobei ein mit der dritten Zuleitung (10) koppelbarer dritter Anschluss des kraftfahrzeugseitigen Gegenstücks mit einer Schaltung (31) gekoppelt ist, die zum Betreiben der Sensorbaugruppe (33) den dritten Anschluss auf Masse (32) oder eine Versorgungsspannung legt,
**dadurch gekennzeichnet,**
**dass** der Türaußengriff (1) eine Beleuchtungsbaugruppe (37) aufweist, die zwischen einem Abgriff (17) an der dritten Zuleitung (10) und einem Knoten (14) eingekoppelt ist,
wobei der Knoten (14) über eine erste Diode (16) mit einem Abgriff (18) an der ersten Zuleitung (5) und über eine zweite Diode (15) mit einem Abgriff (19) an der zweiten Zuleitung (6) gekoppelt ist, wobei beide Dioden (15, 16) mit der gleichen Elektrode mit dem Knoten (14) gekoppelt sind.

2. Türaußengriff-Anordnung nach Anspruch 1, **dadurch gekennzeichnet, dass** das hohe Potenzial eine Versorgungsspannung und das niedrige Potenzial die Masse (32) ist.

3. Türaußengriff-Anordnung nach Anspruch 1 oder 2, **dadurch gekennzeichnet, dass** die Kommunikationsbaugrupppe (2) einen aus einer Reihenschaltung einer Sendespule (3) und eines Kondensators (4) bestehenden Serienschwingkreis umfasst.

4. Türaußengriff-Anordnung nach Anspruch 3, **dadurch gekennzeichnet, dass** die Sendespule (3) zum Abstrahlen eines modulierten Signals mit einer Grundfrequenz im LF-Bereich, vorzugsweise von 125 kHz, dient.

5. Türaußengriff-Anordnung nach einem der Ansprüche 1 - 4 **dadurch gekennzeichnet, dass** die Sensorbaugruppe einen kapazitiven Annäherungssensor umfasst.

6. Türaußengriff-Anordnung nach einem der Ansprüche 1 - 5, **dadurch gekennzeichnet, dass** die Beleuchtungsbaugruppe (37) eine LED (12) umfasst.

7. Türaußengriff-Anordnung nach Anspruch 6, **dadurch gekennzeichnet, dass** der LED (12) ein Widerstand (13) oder ein Widerstandsnetzwerk vorgeschaltet ist.

8. Türaußengriff-Anordnung nach einem der Ansprüche 1 - 7, **dadurch gekennzeichnet, dass** die Abgriffe (17 - 19) mit den Zuleitungen (5, 6, 9, 10) im Inneren des Türaußengriffs (1) verbunden sind.

9. Türaußengriff-Anordnung nach einem der Ansprüche 1 - 8, **dadurch gekennzeichnet, dass** der Verbinder (11) ein vierpoliger Steckverbinder ist.

10. Türaußengriff-Anordnung nach einem der Ansprüche 1 - 9, **dadurch gekennzeichnet,**
**dass** der mit der dritten Zuleitung (10) koppelbare dritte Anschluss des kraftfahrzeugseitigen Gegenstücks mit einem Schalter (31) gekoppelt ist, der zum Betreiben der Sensorbaugruppe (33) den dritten Anschluss auf Masse (32) legt, und
**dass** beide Dioden (15, 16) mit ihren Kathoden mit dem Knoten (14) gekoppelt sind.

## Claims

1. An exterior door handle arrangement for a motor vehicle with an exterior door handle (1) that contains a communication subassembly (2) and a sensor subassembly (33),
wherein the communication subassembly (2) is connected to a first and a second supply line (5, 6),
wherein the sensor subassembly (33) is connected to a third and a fourth supply line (9, 10),
wherein the four supply lines (5, 6, 9, 10) end at a connector (11) of the exterior door handle (1), which can be connected to a counterpart of the exterior door handle arrangement on the motor vehicle,
wherein a first terminal (20), which can be coupled to the first supply line (5), and a second terminal (21) of the counterpart on the motor vehicle, which can be coupled to the second supply line (6), are coupled to a circuit (22) that respectively always connects one of the two terminals (20, 21) to a high potential and the other terminal to a low potential in order to operate the communication subassembly (2), and
wherein a third terminal of the counterpart on the motor vehicle, which can be coupled to the third supply line (10), is coupled to a circuit (31) that connects the third terminal to ground (32) or to a supply voltage in order to operate the sensor subassembly (33),
**characterized in**
**that** the exterior door handle (1) features a lighting subassembly (37) that is coupled between a tap (17) on the third supply line (10) and a node (14),
wherein the node (14) is coupled to a tap (18) on the first supply line (5) via a first diode (16) and to a tap (19) on the second supply line (6) via a second diode (15), and wherein both diodes (15, 16) are coupled to the node (14) with the same electrode.

2. The exterior door handle arrangement according to claim 1, **characterized in that** the high potential is a supply voltage and the low potential is ground (32).

3. The exterior door handle arrangement according to claim 1 or 2, **characterized in that** the communication subassembly (2) comprises a series resonant circuit consisting of a series connection of a transmitter coil (3) and a capacitor (4).

4. The exterior door handle arrangement according to claim 3, **characterized in that** the transmitter coil (3) serves for emitting a modulated signal with a base frequency in the LF-range, preferably 125 kHz.

5. The exterior door handle arrangement according to one of claims 1-4, **characterized in that** the sensor subassembly comprises a capacitive proximity sensor.

6. The exterior door handle arrangement according to one of claims 1-5, **characterized in that** the lighting subassembly (37) comprises an LED (12).

7. The exterior door handle arrangement according to claim 6, **characterized in that** a resistor (13) or a resistor network is connected in series to the LED (12).

8. The exterior door handle arrangement according to one of claims 1-7, **characterized in that** the taps (17-19) are connected to the supply lines (5, 6, 9, 10) inside the exterior door handle (1).

9. The exterior door handle arrangement according to one of claims 1-8, **characterized in that** the connector (11) consists of a multipole connector.

10. The exterior door handle arrangement according to one of claims 1-9, **characterized in**
**that** the third terminal of the counterpart on the motor vehicle, which can be coupled to the third supply line (10), is coupled to a switch (31) that connects the third terminal to ground (32) in order to operate the sensor subassembly (33), and in
**that** both diodes (15, 16) are coupled to the node (14) with their cathodes.

## Revendications

1. Agencement de poignée extérieure de porte pour véhicule automobile comprenant une poignée extérieure de porte (1) qui contient un module de communication (2) et un module de capteurs (33),
dans lequel le module de communication (2) est relié à une première et une deuxième alimentation (5, 6),
dans lequel le module de capteurs (33) est relié à une troisième et une quatrième alimentation (9, 10),
dans lequel les quatre alimentations (5, 6, 9, 10) terminent sur un connecteur (11) de la poignée extérieure de porte (1) qui peut être relié à un équivalent côté véhicule automobile de l'agencement de poignée extérieure de porte,
dans lequel un premier raccord (20) pouvant être relié à la première alimentation (5) et un second raccord (21) de l'équivalent côté véhicule automobile pouvant être couplé à la deuxième alimentation (6) sont couplés à un circuit (22) qui, pour faire fonctionner le module de communication (2), met toujours un des deux raccords (20, 21) à un potentiel élevé et l'autre raccord à un potentiel bas, et
dans lequel un troisième raccord de l'équivalent côté véhicule automobile pouvant être couplé à la troisième alimentation (10) est couplé à un circuit (31) qui, pour faire fonctionner le module de capteurs (33), met le troisième raccord à la masse (32) ou met une tension d'alimentation,
**caractérisé en ce que**
la poignée extérieure de porte (1) présente un module d'éclairage (37) qui est couplé entre un câble d'alimentation (17) sur la troisième alimentation (10) et un noeud (14),
dans lequel le noeud (14) est couplé par une première diode (16) avec un câble d'alimentation (18) sur la première alimentation (5) et par une seconde diode (15) avec un câble d'alimentation (19) sur la seconde alimentation (6), dans lequel les deux diodes (15, 16) sont couplées avec le noeud (14) avec la même électrode.

2. Agencement de poignée extérieure de porte selon la revendication 1, **caractérisé en ce que** le potentiel élevé est une tension d'alimentation et le potentiel bas est la masse (32).

3. Agencement de poignée extérieure de porte selon la revendication 1 ou 2, **caractérisé en ce que** le module de communication (2) comprend un circuit oscillant en série composé d'un montage en série d'une bobine émettrice (3) et d'un condensateur (4).

4. Agencement de poignée extérieure de porte selon la revendication 3, **caractérisé en ce que** la bobine émettrice (3) sert à émettre un signal modulé avec une fréquence de base dans la plage de basses fréquences, de préférence de 125 kHz.

5. Agencement de poignée extérieure de porte selon l'une des revendications 1 à 4, **caractérisé en ce que** le module de capteurs comprend un capteur d'approche capacitif.

6. Agencement de poignée extérieure de porte selon l'une des revendications 1 à 5, **caractérisé en ce que** le module d'éclairage (37) comprend une LED (12).

7. Agencement de poignée extérieure de porte selon la revendication 6, **caractérisé en ce qu'**une résistance (13) ou un réseau de résistances est branché (e) en amont de la LED (12).

8. Agencement de poignée extérieure de porte selon l'une des revendications 1 à 7, **caractérisé en ce que** les câbles d'alimentation (17, 19) sont reliés aux alimentations (5, 6, 9, 10) à l'intérieur de la poignée extérieure de porte (1).

9. Agencement de poignée extérieure de porte selon l'une des revendications 1 à 8, **caractérisé en ce que** le connecteur (11) est un connecteur enfichable à quatre pôles.

10. Agencement de poignée extérieure de porte selon l'une des revendications 1 à 9, **caractérisé en ce que**
le troisième raccord de l'équivalent côté véhicule automobile pouvant être couplé à la troisième alimentation (10) est couplé à un commutateur (31) qui, pour faire fonctionner le module de capteurs (33), met le troisième raccord à la masse (32), et
que les deux diodes (15, 16) sont couplées au noeud (14) par leurs cathodes.
